# EUROPÄISCHE PATENTANMELDUNG

(11) **EP 4 166 872 A1**
(43) Veröffentlichungstag der Anmeldung: **19.04.2023**
(21) Anmeldenummer: 22213092.4
(22) Anmeldetag: 16.04.2020
(51) Int. Cl.: F25B 45/00, F25B 49/00, F25D 16/00

(54) **WÄRMEPUMPENANLAGE MIT EINER KÄLTEMITTELABSCHEIDEEINRICHTUNG UND VERFAHREN ZUM BETREIBEN EINER WÄRMEPUMPENANLAGE**

(30) Priorität: 29.04.2019 DE 102019111017
(62) Teilanmeldung aus: 20169855.2
(71) Anmelder: Wolf GmbH, 84048 Mainburg (DE)
(72) Erfinder: WALLHÖFER, Andreas, 84032 Landshut (DE); STADLER, Georg, 84048 Mainburg (DE); WEIDENHILLER, Thomas, 84048 Mainburg (DE)
(74) Vertreter: Pfrang, Tilman

(57) **Zusammenfassung**

Die Erfindung betrifft eine Kältemittelabscheideeinrichtung (19), insbesondere Luft- Kältemittelabscheideeinrichtung für eine Wärmepumpenanlage, umfassend einen Abscheidebehälter (20) mit mindestens einem Fluideingang (21) und mindestens einem Fluidausgang (22) sowie einer Umlenkeinrichtung (26), die derart angeordnet und konfiguriert ist, dass ein direkter Weg für ein im Betrieb im Abscheidebehälter (70) strömendes Fluid zumindest teilweise, insbesondere vollständig, blockiert ist.

## Beschreibung

Die Erfindung betrifft eine Kältemittelabscheideeinrichtung, insbesondere Luft-Kältemittelabscheideeinrichtung für eine Wärmepumpenanlage sowie ein entsprechendes Verfahren zum Betreiben einer Kältemittelabscheideeinrichtung.

Wärmepumpenanlagen zum Heizen und/oder Kühlen, beispielsweise von Gebäudeteilen, sind im Stand der Technik grundsätzlich bekannt. Derartige Wärmepumpenanlagen weisen oftmals einen Primärkreislauf (z.B. Kältekreis) auf, in dem ein Kältemittel strömen kann und einen Sekundärkreislauf (z. B. Heizwasserkreislauf), in dem ein Heiz- und/oder Kühlfluid strömen kann (und der beispielsweise in Personen-Aufenthaltsbereiche führen kann). Zuletzt ist es aus dem Stand der Technik auch bekannt, in einer derartigen Wärmepumpenanlage einen Luft- bzw. (Mikro-) Blasenabscheider vorzusehen, über den Gase (insbesondere Luft) aus einer Flüssigkeit im Sekundärkreislauf abgeschieden werden können. Diese Merkmale kann auch die erfindungsgemäße Wärmepumpenanlage aufweisen.

Bei einer Beschädigung des Plattenwärmetauschers kann es unter ungünstigen Zuständen zu Leckagen kommen, so dass (ungewollt) Kältemittel aus dem Primärkreislauf in den Sekundärkreislauf übertritt.

Es ist Aufgabe der Erfindung, eine Kältemittelabscheideeinrichtung vorzuschlagen, über die auf effektive und sichere Art und Weise verhindert werden kann, dass (größere Mengen von) Kältemittel aus einem Primärkreis in einen Heiz- und/oder Kühlkreis (Sekundärkreis) weiter transportiert werden. Weiterhin ist es Aufgabe der Erfindung, eine entsprechende Wärmepumpenanlage sowie ein entsprechendes Verfahren zum Betreiben einer Kältemittelabscheideeinrichtung und/oder einer Wärmepumpenanlage vorzuschlagen.

Die Aufgabe wird insbesondere durch eine Kältemittelabscheideeinrichtung, insbesondere Luft-Kältemittelabscheideeinrichtung für eine Wärmepumpenanlage, nach Anspruch 1 gelöst.

Insbesondere wird die Aufgabe gelöst durch eine Kältemittelabscheideeinrichtung, insbesondere Luft-Kältemittelabscheideeinrichtung, vorzugsweise für eine Wärmepumpenanlage, die einen Abscheidebehälter mit mindestens einem Fluideingang und mindestens einem Fluidausgang umfasst, wobei der Abscheidebehälter konfiguriert ist, ein Kältemittel (in einem Heiz- und/oder Kühlkreis bzw. Sekundärkreis) abzuscheiden. Dadurch kann auf einfache Art und Weise verhindert werden, dass kritische Mengen Kältemittel in den Heiz- und/oder Kühlkreislauf, insbesondere Sekundärkreis, beispielsweise durch eine Leckage, gelangen. Vorzugsweise weist der Abscheidebehälter (in einem Innenvolumen) mindestens eine Umlenkeinrichtung (vorzugsweise Umlenkelement) auf, die derart angeordnet und konfiguriert ist, dass ein (direkter) Weg für ein im Betrieb im Abscheidebehälter (vom Fluideingang zum Fluidausgang) strömendes Fluid zumindest teilweise, insbesondere vollständig, blockiert ist.

Unter einer Kältemittelabscheideeinrichtung ist insbesondere eine Einrichtung zu verstehen, die konfiguriert ist, in einem Sekundärkreis (Heiz- und/oder Kühlkreis) strömendes (Leckage-)Kältemittel zumindest teilweise am Weiterströmen zu hindern, insbesondere zumindest teilweise aus dem Sekundärkreis (Heiz- und/oder Kühlkreis) zu entfernen (die teilweise Verhinderung des weiteren Strömens des Kältemittels wird als unabhängiger Aspekt der Erfindung angesehen). Insofern kann die Kältemittelabscheideeinrichtung auch als Sicherungseinrichtung verstanden werden, die zumindest teilweise einen Eintritt bzw. ein Durchströmen von (ungewolltem) Kältemittel in Bereiche des Sekundärkreises (Heiz- und/oder Kühlkreises) verhindert, insbesondere im Fall einer Grobleckage (schwerer Leckage). Insbesondere kann aufgrund der Umlenkeinrichtung erreicht werden, dass sich bei einer entsprechenden Druckerhöhung (insbesondere bei einer Grobleckage von Kältemittel) ein Eispfropfen (am Fluidausgang) bilden kann, so dass Durchleiten von Kältemittel in den Heiz- und/oder Kühlkreis reduziert oder (vollständig) verhindert wird. Die Umlenkeinrichtung kann einstückig, insbesondere monolithisch aufgebaut sein und/oder maximal 10 oder maximal 5 Durchbrüche bzw. Löcher, ggf. keine Löcher (Durchbrüche) aufweisen.

Unter einer Luft-Kältemittelabscheideeinrichtung ist insbesondere eine Einrichtung zu verstehen, die konfiguriert ist, sowohl Luft als auch ein (insbesondere gasförmig vorliegendes) Kältemittel abzuscheiden (also insbesondere zumindest teilweise am weiteren Durchströmen durch den Sekundärkreis bzw. Heiz- und/oder Kühlkreislauf zu hindern, insbesondere zumindest teilweise zu entfernen).

Unter einem Fluideingang ist ein Abschnitt zu verstehen, über den (im normalen Betrieb) ein Heiz- bzw. Kühlfluid in ein Innenvolumen des Abscheidebehälters eintritt. Im einfachsten Fall kann es sich hierbei um eine Öffnung handeln, ggf. um einen Rohrabschnitt und/oder Rohrstutzen (der ggf. in das Innenvolumen hineinragen kann, oder, alternativ, nicht hineinragen kann). Analog handelt es sich bei einem Fluidausgang um einen Abschnitt, aus dem Fluid aus dem Behälter austritt. Auch hier handelt es sich im einfachsten Fall um eine Öffnung, insbesondere jedoch um einen Rohrabschnitt, insbesondere Rohrstutzen.

Vorzugsweise ist ein direkter Weg für ein im Betrieb im Abscheidebehälter stehendes Fluid zumindest teilweise, insbesondere vollständig, durch die Umlenkeinrichtung innerhalb des Abscheidebehälters blockiert. Betrachtet man eine Querschnittsfläche, an der das über den Fluideingang einströmende Fluid in das Innenvolumen des Abscheidebehälters mündet, so soll vorzugsweise i) für mindestens die Hälfte, weiter vorzugsweise mindestens ¾, dieser Querschnittsfläche gelten, dass in diesem Bereich einströmende Fluidteilchen nicht auf direktem Weg zum Fluidausgang (bzw. einer Querschnittsfläche, an der ein Übergang zwischen Innenvolumen des Behälters und Fluidausgang vorliegt) gelangen können. Besonders bevorzugt gilt dies für sämtliche aus dem Fluideingang einströmende Fluidteilchen. Alternativ oder zusätzlich gilt für mindestens die Hälfte, weiter vorzugsweise mindestens ¾, einer Querschnittsfläche des Fluidausgangs, dass einströmende Fluidteilchen nicht auf direktem Weg vom Fluideingang (bzw. einer Querschnittsfläche, an der ein Übergang zwischen Innenvolumen des Behälters und Fluideingang vorliegt) zu diesem Bereich gelangen können. Besonders bevorzugt gilt dies für sämtliche aus dem Fluidausgang ausströmenden Fluidteilchen.

Vorzugsweise ragt der Fluidausgang, insbesondere ein den Fluidausgang definierender Kanalabschnitt, in den Abscheidebehälter hinein, beispielsweise um mindestens 2 mm, vorzugsweise mindestens 5 mm und/oder höchstens 100 mm, vorzugsweise höchstens 50 mm. Dadurch kann insbesondere erreicht werden, dass das im Abscheidebehälter strömende Fluid von einer Fluidausgangsseite gegen die Umlenkeinrichtung strömt, so dass sich (im Falle einer Grobleckage) effektiv ein Eispfropfen bilden kann.

Bei Fluidausgang und/oder Fluideingang kann es sich um Abschnitte handeln, die integraler Bestandteil des Abscheidebehälters sind und an die jeweils eine zuführende bzw. abführende Leitung anschließbar ist (bzw. angeflanscht werden kann).

Vorzugsweise weist das Umlenkelement einen (zum Fluidausgang hin) gebogenen Rand auf. Dadurch kann sich besonders effektiv ein Eispfropfen bilden und ein Durchleiten von Kältemittel in den Sekundärkreis reduziert (verhindert) werden.

Konkret kann die Umlenkeinrichtung (das Umlenkelement) eine Platte und/oder eine Kappe und/oder einen Teller umfassen oder (zumindest im Wesentlichen) daraus bestehen. Insbesondere bei einer Kombination von einem in den Abscheidebehälter hineinragenden Fluidausgang und einem Umlenkelement mit zum Fluidausgang hin gebogenem Rand bildet sich auf einfache Art und Weise (im Fall einer Grobleckage) ein Eispfropfen aus.

In einer konkreten Ausführungsform bilden Umlenkeinrichtung (Umlenkelement) und Fluidausgang (gemeinsam) eine Pilzform aus (zumindest im Querschnitt, vorzugsweise auch bei einer dreidimensionalen Betrachtung). Konkret kann das Umlenkelement einen Rand aufweisen, der über den Fluidausgang gestülpt ist, insbesondere einen Rand aufweisen, der eine Fläche, an der das strömende Fluid in den Fluidausgang eintritt, zwischen sich aufnimmt.

Vorzugsweise definiert das Umlenkelement einen Aufnahmeraum, in dem der Fluidausgang (abschnittsweise) aufgenommen ist.

Besonders bevorzugt ist der Fluidausgang an einer Unterseite des Abscheidebehälters (in einem Zustand, in dem die Abscheideeinrichtung betrieben werden kann) angeordnet. Dadurch wird effektiv ermöglicht, Risiken aus einer (Grob-)Leckage zu reduzieren.

In bevorzugten Ausführungsformen ist am Abscheidebehälter ein Sicherheitsventil vorgesehen. Durch ein derartiges Sicherheitsventil kann vorzugsweise Kältemittel (in flüssiger oder Gas-Form) abgeleitet werden (während sich im/am Fluidausgang ein Eispfropfen bilden kann). Das Sicherheitsventil ist vorzugsweise oberhalb des Fluidausgangs und/oder oberhalb der Umlenkeinrichtung und/oder unterhalb des Fluideingangs und/oder unterhalb eines (nachfolgend noch weiter erläuterten) Entlüfters, insbesondere Automatik-Entlüfters, angeordnet (in einem Zustand, in dem die Kältemitteleinrichtung betrieben werden kann). Konkret kann das Sicherheitsventil seitlich (also insbesondere an einer, beispielsweise zylindermantelförmigen, Seitenwand) angeordnet sein.

Das Sicherheitsventil kann eine Weite (Nennweite) von mindestens 0,5", vorzugsweise mindestens 1" und/oder höchstens 2" aufweisen. Als Weite (Nennweite) soll insbesondere die Größe bzw. das Anschlussmaß und/oder der innere Durchmesser des Sicherheitsventils verstanden werden.

Ein Öffnungsdruck des Sicherheitsventils ist vorzugsweise mindestens 1,5 bar, weiter vorzugsweise mindestens 2 bar und/oder höchstens 5 bar, vorzugsweise höchstens 3 bar.

Konkret kann das Sicherheitsventil ein gegenüber dem Abscheidebehälter separates Bauteil bilden, das an eine entsprechende Öffnung des Abscheidebehälters angeschlossen ist. Durch ein Sicherheitsventil kann besonders effektiv Kältemittel, insbesondere in flüssiger Form, abgeleitet werden (insbesondere im Falle einer Grobleckage).

Alternativ oder zusätzlich kann ein Entlüfter (insbesondere Automatik-Entlüfter) am Abscheidebehälter vorgesehen sein. Über diesen können insbesondere kleinere Kältemittelmengen mit nur geringen Druckerhöhungen abgeschieden werden. Der Entlüfter (Automatik-Entlüfter) ist vorzugsweise oberhalb des Fluidausgangs und/oder der Umlenkeinrichtung und/oder des Sicherheitsventils und/oder des Fluideingangs, insbesondere an einer Oberseite des Abscheidebehälters vorgesehen. Der Entlüfter kann ggf. als separates Bauteil vorliegen, das an den Abscheidebehälter angebracht ist (oder integraler Bestandteil des Abscheidebehälters sein). Der Entlüfter kann ein verschließbares Ventil aufweisen.

Am Abscheidebehälter, insbesondere am Fluideingang kann ein Temperatursensor bzw. ein Anschluss für einen solchen vorgesehen sein. Bei dem Temperatursensor kann es sich um einen Vorlauf-Fühler, insbesondere wassersitzend, handeln.

Der Fluideingang ist vorzugsweise seitlich (also an einer, insbesondere zylindermantelförmigen, Seitenwand) und/oder einem oberen Drittel des Abscheidebehälters angeordnet. Die Angabe "oberes Drittel" bezieht sich hier insbesondere auf ein Innenvolumen des Abscheidebehälters, von einem niedrigsten Punkt bis zu einem höchsten Punkt. Dadurch kann die Kältemittelabscheideeinrichtung effektiv betrieben werden.

Vorzugsweise führt der Fluideingang tangential in den Abscheidebehälter hinein. Darunter ist insbesondere zu verstehen, dass aus dem Fluideingang austretendes Fluid tangential zu einer Innenwand (insbesondere Zylindermantelwand) strömt (und anschließend an dieser Innenwand, abhängig von deren Geometrie, weiterströmt). Insbesondere wenn es sich bei der Innenwand um eine zylinderwandförmige Struktur handelt (kreiszylindermantelförmige Struktur), verläuft die Fluidströmung in Form einer Helix (zumindest abschnittsweise), so dass (insbesondere bei einem entsprechenden, weiter unten noch weiter erläuterten, Blasenabscheider) effektiv Luft- und/oder Kältemittel abgeschieden werden kann. Dieser Gedanke des tangentialen Einführens des Fluids wird als unabhängiger Lösungsgedanke der Erfindung angesehen und entsprechend beansprucht (ggf. auch ohne sämtliche in Anspruch 1 definierten Merkmale, allerdings optional mit weitern Merkmalen aus den Unteransprüchen und/oder der Beschreibung bzw. den Figuren).

Vorzugsweise ist in dem Abscheidebehälter, insbesondere zwischen der Umlenkeinrichtung und einem (vorzugsweise dem obigen) Entlüfter, ein Blasenabscheider, beispielsweise in Gitterform, angeordnet. Dadurch können effektiv zumindest geringere Mengen an Luft bzw. Kältemittel abgeschieden werden (beispielsweise bei einer nur geringfügigen Leckage bzw. Feinleckage). Dies steigert weiter die Effizienz der Kältemittelabscheideeinrichtung.

Ein Abstand zwischen Fluidausgang und Umlenkelement kann mindestens 2 mm und/oder höchstens 100 mm, vorzugsweise höchstens 50 mm, weiter vorzugsweise höchstens 15 mm betragen.

Ein Abstand zwischen Fluidausgang und Umlenkelement kann mindestens 1 % und/oder höchstens 40 %, vorzugsweise höchstens 30 %, weiter vorzugsweise höchstens 12 %, einer Höhe des Abscheidebehälters (bzw. einer Höhe eines Innenvolumens des Abscheidebehälters) betragen.

Ein Abstand zwischen Fluidausgang und Umlenkelement kann mindestens 1 % und/oder höchstens 30 %, vorzugsweise höchstens 20 %, weiter vorzugsweise höchstens 8 %, eines Abstandes zwischen Fluideingang und Fluidausgang betragen.

Insofern es auf einen jeweiligen Abstand" ankommt, soll insbesondere der jeweilige Minimalabstand betrachtet werden, also das Minimum hinsichtlich eines Abstandes für alle Punktepaare (wobei sich der eine Punkt auf dem jeweils einen Element bzw. der jeweils einen Einrichtung und der andere Punkt auf dem jeweils anderen Element bzw. der jeweils anderen Einrichtung befindet).

Vorzugsweise ist/sind mindestens eine Befestigungs- bzw. Verbindungseinrichtung, insbesondere mindestens eine Verbindungssteg vorgesehen, um die Umlenkeinrichtung, beispielsweise am, insbesondere (kreis- )zylindrischen, Fluidausgang, abzustützen. Derartige Befestigungs- bzw. Verbindungseinrichtung(en) sollen bei der Abstandsbestimmung gemäß den vorhergehenden Absätzen insbesondere unberücksichtigt bleiben.

Die Umlenkeinrichtung kann rotationssymmetrisch sein. Ein Durchmesser (als Abstand desjenigen Punktepaares, das zueinander unter allen Punktepaaren der Umlenkeinrichtung den größten Abstand aufweist) ist vorzugsweise größer als ein Durchmesser des Fluidausgangs (in einer Ebene, in der ein Übergang zum Innenvolumen des Abscheidebehälters angeordnet ist (vorzugsweise um mindestens 1,2-mal größer und/oder maximal 3-mal größer).

Bei einer rotationssymmetrischen Umlenkeinrichtung sollen zu Bestimmung des Durchmessers insbesondere nur Punktepaare berücksichtigt werden, die in einer gemeinsamen Ebene senkrecht zur Rotationsachse liegen (bei einem kreisförmigen Querschnitt wäre dies der Kreisdurchmesser).

Im Falle einer rotationssymmetrischen Umlenkeinrichtung ist deren Rotationsachse vorzugsweise zumindest im Wesentlichen parallel, oder insbesondere fluchtend mit einer Rotationsachse des Fluidausgangs. Im Betriebszustand des Abscheidebehälters (bzw. der Wärmepumpenanlage) deckt die Umlenkeinrichtung den Fluidausgang in einer Ansicht von oben zu mindestens 50 %, vorzugsweise zu mindestens 80 %, weiter vorzugsweise vollständig ab.

Eine Höhe der Umlenkeinrichtung (bei einer rotationssymmetrischen Ausgestaltung wäre dies die Erstreckung entlang der Rotationsachse) ist vorzugsweise kleiner als ein Durchmesser der Umlenkeinrichtung, vorzugsweise kleiner oder gleich 0,8-mal dem Durchmesser, weiter vorzugsweise kleiner gleich 0,5-mal dem Durchmesser und/oder größer oder gleich 0,1-mal dem Durchmesser.

Eine Wandstärke der Umlenkeinrichtung kann konstant sein oder variieren. Die Umlenkeinrichtung ist insbesondere nicht gitterförmig bzw. bildet vorzugsweise kein Gitter aus. Die Umlenkeinrichtung erstreckt sich in Ausführungsformen über maximal 50 %, vorzugsweise maximal 30 %, noch weiter vorzugsweise maximal 20 % und/oder mindestens 5 % einer Höhe eines Innenvolumens des Abscheidebehälters (in Betriebsstellung).

Die oben genannte Aufgabe wird weiterhin gelöst durch eine Wärmepumpenanlage, insbesondere zum Heizen und/oder Kühlen eines Raumes, vorzugsweise eines Personen-Aufenthaltsbereiches, umfassend eine Kältemittelabscheideeinrichtung, wie oben (und nachfolgend) beschrieben.

Die Wärmepumpenanlage umfasst vorzugsweise einen Primärkreislauf (z.B. Kältekreis, beispielsweise in einer Außeneinheit) und einen Sekundärkreislauf (z.B. Heizkreis, der beispielsweise in Personen-Aufenthaltsbereiche führen kann). Ein (bzw. das obige) Kältemittel strömt vorzugsweise im Primärkreis. Ein Heiz- bzw. Kühlfluid strömt vorzugsweise im Sekundärkreislauf (z.B. Heizkreis).

Die Wärmepumpenanlage kann einen Wärmetauscher, insbesondere Plattenwärmetauscher (zwischen Primär- und Sekundärkreis) aufweisen.

Vorzugsweise ist die Kältemittelabscheideeinrichtung (fluidtechnisch) hinter dem Wärmetauscher, insbesondere Plattenwärmetauscher, der Wärmepumpenanlage angeordnet (vorzugsweise unmittelbar dahinter angeordnet). Die Kältemittelabscheideeinrichtung kann am Vorlauf (Austritt) des Wärmetauschers (insbesondere an einer höchsten Stelle des Sekundärkreises) angeordnet sein.

Ein (insbesondere das obige) Sicherheitsventil der Kältemittelabscheideeinrichtung kann einen Öffnungsdruck aufweisen, der kleiner ist als der Öffnungsdruck von zumindest einem weiteren Sicherheitsventil der Wärmepumpenanlage, vorzugsweise kleiner ist als die Öffnungsdrücke sämtlicher weiterer Sicherheitsventile der Wärmepumpenanlage. Dadurch kann die Sicherheit der Wärmepumpenanlage weiter verbessert werden.

Die oben genannte Aufgabe wird weiterhin gelöst durch ein Verfahren zum Betreiben einer Kältemittelabscheideeinrichtung, wie oben (bzw. nachfolgend) beschrieben und/oder eine Wärmepumpenanlage wie oben (bzw. nachfolgend) beschrieben. Vorzugsweise wird im Falle einer Feinleckage Kältemittel an einem (insbesondere dem obigen) Entlüfter abgeschieden. Alternativ oder zusätzlich wird im Falle einer (Grob-)Leckage eines (insbesondere des obigen) Kältemittels der Fluidausgang vorzugsweise (zumindest teilweise) eingefroren, wobei das Kältemittel vorzugsweise über ein (das obige) Sicherheitsventil abgeschieden wird.

Eine Verdampfungstemperatur des Kältemittels liegt vorzugsweise (bei 1 bar) unter der Verdampfungstemperatur von Wasser, insbesondere unter 100 °C, vorzugsweise unter 80 °C. Das Kältemittel kann beispielsweise (insbesondere teilhalogenierte) Fluorkohlenwasserstoffe aufweisen und/oder brennbar sein, beispielsweise (nicht halogenierte oder chlorierte oder fluorierte) Kohlenwasserstoffe, wie beispielsweise Propan, Propen, Propylen oder Butan aufweisen.

Weitere Ausführungsformen ergeben sich aus den Unteransprüchen. Nachfolgend wird die Erfindung anhand von Ausführungsbeispielen beschrieben, die anhand der Abbildungen näher erläutert werden. Hierbei zeigen:
- Fig. 1: eine erfindungsgemäße Wärmepumpenanlage, schematisch dargestellt;
- Fig. 2: eine Schrägansicht einer erfindungsgemäßen Kältemittelabscheideeinrichtung; und
- Fig. 3: eine Schräg-Schnitt-Ansicht der Ausführungsform nach Fig. 1.

In der nachfolgenden Beschreibung werden für gleiche und gleichwirkende Teile dieselben Bezugsziffern verwendet.

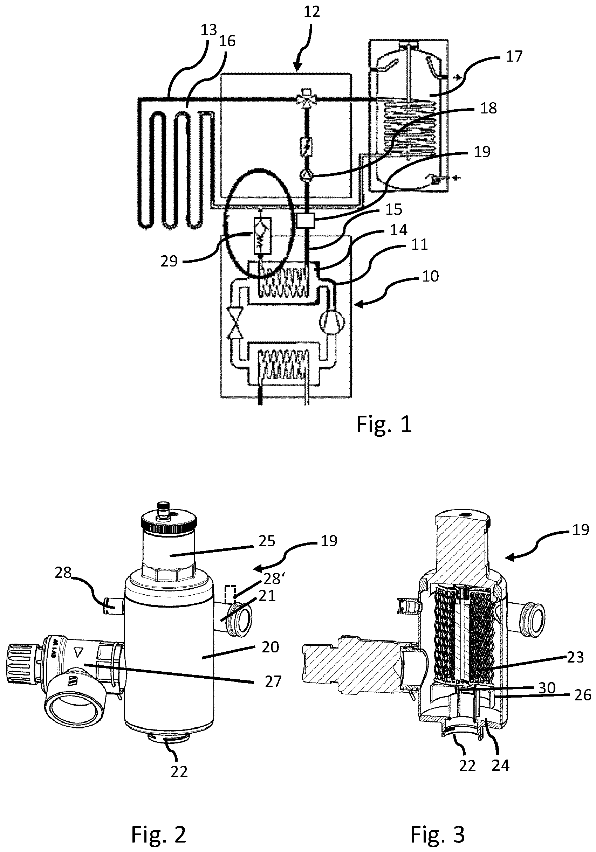

Fig. 1 zeigt eine erfindungsgemäße Wärmepumpenanlage. Die Wärmepumpenanlage weist eine Außeneinheit 10 mit einem Kältemittelkreis 11 (Primärkreis) und eine Inneneinheit 12 mit einem Heizkreis (Sekundärkreis) 13 auf. Bei dem Heizkreis 13 kann es sich alternativ oder zusätzlich auch um einen Kühlkreis handeln (der Einfachheit halber wird nachfolgend immer nur von einem "Heizkreis" gesprochen). Zwischen Kältemittelkreis 11 und Heizkreis 13 ist ein Wärmetauscher (Plattenwärmetauscher) 14 angeordnet. Im Wärmetauscher 14 wird Wärme vom Kältemittelkreis 11 auf den Heizkreis 13 übertragen (bzw. umgekehrt, im Falle der Kühlung).

Ausgehend von einem Vorlauf 15 des Heizkreises 13 (an einem Austritt des Wärmetauschers 14) wird ein im Wärmetauscher 14 erwärmtes Fluid des Heizkreises 13 einer Heizung 16 und/oder einem Warmwasserspeicher 17 zugeführt. Dort wird Wärme abgegeben und das abgekühlte Fluid im Heizkreis 13 wird wieder dem Wärmetauscher 14 zugeführt. Zum Fördern des Fluids im Heizkreis 13 kann eine Pumpe 18 vorgesehen sein. Am Vorlauf (des Wärmetauschers 14) ist weiterhin eine erfindungsgemäße Kältemittelabscheideeinrichtung 19 vorgesehen. Diese ist mit weiteren Details in Fig. 2 und 3 dargestellt.

Im Rücklauf des Heizkreises 13 ist ein Rückschlagventil 29 vorgesehen.

Die Kältemittelabscheideeinrichtung 19 ist vorzugsweise an einer höchsten Stelle des Heizkreises 13 angeordnet (montiert). Dadurch kann erreicht werden, dass Luft und ggf. Kältemittel sicher aus dem Heizkreis abgeschieden werden. Durch das Rückschlagventil wird verhindert, dass sich eine Druckerhöhung entgegen der Strömungsrichtung ausbreitet.

Die Kältemittelabscheideeinrichtung 19 umfasst (siehe Figuren 2 und 3) einen Abscheidebehälter 20 mit einem Fluideingang 21 und einem Fluidausgang 22. Weiterhin befindet sich innerhalb des Abscheidebehälters 20 (fluidtechnisch zwischen Fluideingang 21 und Fluidausgang 22) ein Blasenabscheider 23 (vorzugsweise in Gitterform). Der Fluideingang 21 ist so ausgestaltet und positioniert, dass das in den Abscheidebehälter 20 eintretende Fluid eine tangentiale Richtung aufweist. Dadurch strömt das Fluid (in Fig. 2 und 3) in einer Helix (Schraubenbahn) von oben nach unten, bis es einen Boden 24 des Abscheidebehälters 20 erreicht. Während dieser (schraubenartigen) Strömung werden Gasblasen (beispielsweise aus Luft und/oder eines Kältemittels im gasförmigen Zustand) aus dem Fluidstrom abgetrennt, so dass sie über einen (Automatik-)Entlüfter 25 entweichen können.

Ein direkter Weg zwischen Fluideingang 21 und Fluidausgang 22 wird durch eine (hier kappenförmige) Umlenkeinrichtung 26 blockiert. Dadurch wird erreicht, dass das im Abscheidebehälter 20 strömende Fluid bei Erreichen des Bodens 24 zwischen Umlenkeinrichtung 26 und den in ein Innenvolumen des Abscheidebehälters 20 hineinragenden Fluidausgang nach oben strömt und erst dann durch den Fluidausgang (wiederum nach unten strömend) aus dem Abscheidebehälter 20 ausströmt.

Bei einer Druckerhöhung (aufgrund einer Leckage von Kältemittel aus dem Kältemittelkreis 11 in den Heizkreis 13) bildet sich am Fluidausgang 22 (innerhalb der kappenförmigen Umlenkeinrichtung 26) ein Eispfropfen, der ein Durch- bzw. Weiterleiten von Kältemittel in den Heizkreis verhindert. Zumindest ein Großteil des Kältemittels wird dabei (in flüssiger Form) durch ein Sicherheitsventil 27 abgeführt.

Über den Fluideingang 21 kann gasförmiges und/oder flüssiges Kältemittel eintreten (im Fall einer Feinleckage) und wird - unterstützt durch den Blasenabscheider 23 über den Entlüfter 25 abgeschieden.

Bei einer schlagartigen Freisetzung größerer Mengen Kältemittel (Grobleckage) in den Heizkreis 13 wird durch die (pilz- bzw. plattenförmige) Umlenkeinrichtung 26 in der Kältemittelabscheideeinrichtung 19 ein Druckstoß erzeugt, der das Sicherheitsventil 27 öffnet. Dadurch wird der Heizkreis 13 vor einer (übermäßigen) Druckerhöhung geschützt.

Am Abscheidebehälter, beispielsweise an einer Außenwand desselben und/oder am Fluideingang 21, ist vorzugsweise (je) ein Anschluss 28, 28' für einen Temperaturfühler vorgesehen.

Optional kann die Umlenkeinrichtung über Verbindungsstege 30 am Fluidausgang abgestützt sein.

In einer alternativen Ausführungsform kann die Kältemittelabscheideeinrichtung 19 ohne Entlüfter 25 ausgeführt sein. Auch bei einer derartigen Ausführungsform wird der Heizkreis 13 vor starken Druckanstiegen geschützt und bei einer Grobleckage kann Kältemittel über das Sicherheitsventil 27 nach außen abgegeben werden.

Nachfolgend werden weitere, teils unabhängige Aspekte der Erfindung erläutert, die hiermit als erfindungsgemäß offenbart und beansprucht werden. Diese Aspekte können optional mit Aspekten aus dem vorangehenden Text und/oder den beigefügten Ansprüchen kombiniert werden.

Aspekt 1: Kältemittelabscheideeinrichtung (19), insbesondere Luft-Kältemittelabscheideeinrichtung für eine Wärmepumpenanlage, umfassend einen Abscheidebehälter (20) mit mindestens einem Fluideingang (21) und mindestens einem Fluidausgang (22) sowie einer Umlenkeinrichtung (26), die derart angeordnet und konfiguriert ist, dass ein direkter Weg für ein im Betrieb im Abscheidebehälter (20)-strömendes Fluid zumindest teilweise, insbesondere vollständig, blockiert ist.

Aspekt 2: Kältemittelabscheideeinrichtung nach Aspekt 1,wobei der Fluidausgang (22) in den Abscheidebehälter (20) hineinragt.

Aspekt 3: Kältemittelabscheideeinrichtung nach Aspekt 1 oder 2, wobei die Umlenkeinrichtung (26) eine Platte und/oder eine Kappe und/oder einen Teller und/oder einen zum Fluidausgang hin gebogenen Rand umfasst.

Aspekt 4: Kältemittelabscheideeinrichtung nach einem der vorhergehenden Aspekte, wobei die Umlenkeinrichtung (26) und der Fluidausgang (22) gemeinsam eine Pilzform ausbilden.

Aspekt 5: Kältemittelabscheideeinrichtung nach einem der vorhergehenden Aspekte, wobei der Fluidausgang (22) an einer Unterseite angeordnet ist.

Aspekt 6: Kältemittelabscheideeinrichtung nach einem der vorhergehenden Aspekte, wobei am Abscheidebehälter (20), insbesondere seitlich, ein, vorzugsweise oberhalb der Umlenkeinrichtung (26) angeordnetes, Sicherheitsventil, insbesondere mit einer Weite von mindestens 0,5"; vorzugsweise mindestens 1"; vorgesehen ist und/oder am Abscheidebehälter (20), insbesondere an einer Oberseite, ein Entlüfter (25), insbesondere Automatikentlüfter, vorgesehen ist.

Aspekt 7: Kältemittelabscheideeinrichtung nach einem der vorhergehenden Aspekte, wobei der Fluideingang seitlich und/oder in einem oberen Drittel des Abscheidebehälters (20) angeordnet ist und/oder tangential in den Abscheidebehälter (20) hineinführt.

Aspekt 8: Kältemittelabscheideeinrichtung nach einem der vorhergehenden Aspekte, wobei in dem Abscheidebehälter (20), insbesondere zwischen der Umlenkeinrichtung (26) und einem/dem Entlüfter (25), ein Blasenabscheider (23), beispielsweise in Gitterform, angeordnet ist.

Aspekt 9: Kältemittelabscheideeinrichtung nach einem der vorhergehenden Aspekte, wobei ein Abstand zwischen Fluidausgang (22) und Umlenkeinrichtung (26) mindestens 2 mm und/oder höchstens 100 mm, vorzugsweise höchstens 50 mm, vorzugsweise höchstens 15 mm beträgt und/oder ein Abstand zwischen Fluidausgang (22) und Umlenkeinrichtung (26) mindestens 1 % und/oder 40 %, vorzugsweise höchstens 30 %, vorzugsweise höchstens 12 %, einer Höhe des Abscheidebehälters beträgt, und/oder ein Abstand zwischen Fluidausgang (22) und Umlenkeinrichtung (26) mindestens 1 % und/oder höchstens 30 %, vorzugsweise höchstens 20 % mm, vorzugsweise höchstens 8 %, eines Abstandes zwischen Fluideingang (21) und Fluidausgang (22) beträgt.

Aspekt 10: Wärmepumpenanlage, insbesondere zum Heizen und/oder Kühlen eines Raumes, umfassend eine Kältemittelabscheideeinrichtung (19) nach einem der vorhergehenden Aspekte.

Aspekt 11: Wärmepumpenanlage nach Aspekt 10, wobei die Kältemittelabscheideeinrichtung (19) fluidtechnisch, insbesondere unmittelbar, hinter einem Wärmetauscher (14), insbesondere Plattenwärmetauscher, der Wärmepumpenanlage angeordnet ist.

Aspekt 12. Wärmepumpenanlage nach Aspekt 10 oder 11, wobei ein/das Sicherheitsventil (27) der Kältemittelabscheideeinrichtung (19) einen Öffnungsdruck hat, der kleiner ist als der Öffnungsdruck von zumindest einem weiteren Sicherheitsventil der Wärmepumpenanlage, vorzugsweise kleiner ist als die Öffnungsdrücke sämtlicher weiterer Sicherheitsventile der Wärmepumpenanlage.

Aspekt 13: Verfahren zum Betreiben einer Kältemittelabscheideeinrichtung nach einem der vorhergehenden Aspekte 1 bis 9 und/oder einer Wärmepumpenanlage nach einem der Aspekte 10 bis 12, wobei im Falle einer Feinleckage eines Kältemittels das Kältemittel vorzugsweise an einem/dem Entlüfter (25), insbesondere Automatikentlüfter, abgeschieden wird und/oder im Falle einer Grobleckage eines/des Kältemittels der Fluidausgang (12) vorzugsweise einfriert und insbesondere über ein/das Sicherheitsventil zumindest teilweise abgeschieden wird.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichen

- 10: Außeneinheit
- 11: Kältemittelkreis
- 12: Inneneinheit
- 13: Heizkreis
- 14: Wärmetauscher
- 15: Vorlauf
- 16: Heizung
- 17: Warmwasserspeicher
- 18: Pumpe
- 19: Kältemittelabscheideeinrichtung
- 20: Abscheidebehälter
- 21: Fluideingang
- 22: Fluidausgang
- 23: Blasenabscheider
- 24: Boden
- 25: Entlüfter
- 26: Umlenkeinrichtung
- 27: Sicherheitsventil
- 28: Anschluss für Temperaturfühler
- 29: Rückschlagventil
- 30: Verbindungssteg

## Patentansprüche

1. Wärmepumpenanlage, insbesondere zum Heizen und/oder Kühlen eines Raumes, umfassend eine Kältemittelabscheideeinrichtung (19), insbesondere Luft- Kältemittelabscheideeinrichtung, wobei die Kältemittelabscheideeinrichtung umfasst: einen Abscheidebehälter (20) mit mindestens einem Fluideingang (21) und mindestens einem Fluidausgang (22) sowie einer Umlenkeinrichtung (26), die derart angeordnet und konfiguriert ist, dass ein direkter Weg für ein im Betrieb im Abscheidebehälter (20) strömendes Fluid zumindest teilweise, insbesondere vollständig, blockiert ist.

2. Wärmepumpenanlage nach Anspruch 1,
**dadurch gekennzeichnet, dass**
der Fluidausgang (22) in den Abscheidebehälter (20) hineinragt.

3. Wärmepumpenanlage nach Anspruch 1 oder 2,
**dadurch gekennzeichnet, dass**
die Umlenkeinrichtung (26) eine Platte und/oder eine Kappe und/oder einen Teller und/oder einen zum Fluidausgang hin gebogenen Rand umfasst.

4. Wärmepumpenanlage nach einem der vorhergehenden Ansprüche,
**dadurch gekennzeichnet, dass**
die Umlenkeinrichtung (26) und der Fluidausgang (22) gemeinsam eine Pilzform ausbilden.

5. Wärmepumpenanlage nach einem der vorhergehenden Ansprüche,
**dadurch gekennzeichnet, dass**
der Fluidausgang (22) an einer Unterseite angeordnet ist.

6. Wärmepumpenanlage nach einem der vorhergehenden Ansprüche,
**dadurch gekennzeichnet, dass**
am Abscheidebehälter (20), insbesondere seitlich, ein, vorzugsweise oberhalb der Umlenkeinrichtung (26) angeordnetes, Sicherheitsventil, insbesondere mit einer Weite von mindestens 0,5"; vorzugsweise mindestens 1"; vorgesehen ist und/oder
am Abscheidebehälter (20), insbesondere an einer Oberseite, ein Entlüfter (25), insbesondere Automatikentlüfter, vorgesehen ist.

7. Wärmepumpenanlage nach einem der vorhergehenden Ansprüche,
**dadurch gekennzeichnet, dass**
der Fluideingang seitlich und/oder in einem oberen Drittel des Abscheidebehälters (20) angeordnet ist und/oder tangential in den Abscheidebehälter (20) hineinführt.

8. Wärmepumpenanlage nach einem der vorhergehenden Ansprüche,
**dadurch gekennzeichnet, dass**
in dem Abscheidebehälter (20), insbesondere zwischen der Umlenkeinrichtung (26) und einem/dem Entlüfter (25), ein Blasenabscheider (23), beispielsweise in Gitterform, angeordnet ist.

9. Wärmepumpenanlage nach einem der vorhergehenden Ansprüche,
**dadurch gekennzeichnet, dass**
ein Abstand zwischen Fluidausgang (22) und Umlenkeinrichtung (26) mindestens 2 mm und/oder höchstens 100 mm, vorzugsweise höchstens 50 mm, vorzugsweise höchstens 15 mm beträgt und/oder ein Abstand zwischen Fluidausgang (22) und Umlenkeinrichtung (26) mindestens 1 % und/oder 40 %, vorzugsweise höchstens 30 %, vorzugsweise höchstens 12 %, einer Höhe des Abscheidebehälters beträgt, ein Abstand zwischen Fluidausgang (22) und Umlenkeinrichtung (26) mindestens 1 % und/oder höchstens 30 %, vorzugsweise höchstens 20 % mm, vorzugsweise höchstens 8 %, eines Abstandes zwischen Fluideingang (21) und Fluidausgang (22) beträgt.

10. Wärmepumpenanlage nach einem der vorhergehenden Ansprüche,,
**dadurch gekennzeichnet, dass**
die Kältemittelabscheideeinrichtung (19) fluidtechnisch, insbesondere unmittelbar, hinter einem Wärmetauscher (14), insbesondere Plattenwärmetauscher, der Wärmepumpenanlage angeordnet ist.

11. Wärmepumpenanlage nach einem der vorhergehenden Ansprüche,,
**dadurch gekennzeichnet, dass**
ein/das Sicherheitsventil (27) der Kältemittelabscheideeinrichtung (19) einen Öffnungsdruck hat, der kleiner ist als der Öffnungsdruck von zumindest einem weiteren Sicherheitsventil der Wärmepumpenanlage, vorzugsweise kleiner ist als die Öffnungsdrücke sämtlicher weiterer Sicherheitsventile der Wärmepumpenanlage.

12. Wärmepumpenanlage nach Anspruch 11,
**dadurch gekennzeichnet, dass**
die Kältemittelabscheideeinrichtung (19) in einem Vorlauf eines Heizkreises der Wärmepumpenanlage angeordnet ist.

13. Wärmepumpenanlage nach einem der vorhergehenden Ansprüche,
**dadurch gekennzeichnet, dass**
ein Rückschlagventil (29) im Rücklauf eines/des Heizkreises der Wärmepumpenanlage vorgesehen ist.

14. Verfahren zum Betreiben einer Wärmepumpenanlage nach einem der vorhergehenden Ansprüche.

15. Verfahren nach Anspruch 14, wobei im Falle einer Feinleckage eines Kältemittels das Kältemittel vorzugsweise an einem/dem Entlüfter (25), insbesondere Automatikentlüfter, abgeschieden wird und/oder im Falle einer Grobleckage eines/des Kältemittels der Fluidausgang (12) vorzugsweise einfriert und insbesondere über ein/das Sicherheitsventil zumindest teilweise abgeschieden wird.
